# EUROPEAN PATENT APPLICATION

(11) **EP 4 603 636 A1**
(43) Date of publication of application: **20.08.2025**
(21) Application number: 25156124.7
(22) Date of filing: 06.02.2025
(51) Int. Cl.: D21C 11/12

(54) **METHOD AND DEVICE FOR PRODUCING PULPING CHEMICALS BY COMBUSTION**

(30) Priority: 19.02.2024 FI 20245200
(71) Applicant: Valmet Technologies Oy, 02150 Espoo (FI)
(72) Inventor: KYTÖ, Matti, 33900 TAMPERE (FI)
(74) Representative: Berggren Oy

(57) **Abstract**

A method for producing a pulping chemical (PC) by burning sulphur and malodorous substance (OG). The method comprises feeding primary fuel (F1) comprising elementary sulphur and heated oxidizer (HO) to a first combustion zone (Z1) of a furnace (100) limited by an inner wall (110); feeding malodorous substance (OG) and heated oxidizer (HO) to the furnace to form at least a second combustion zone (Z2) to the furnace (100); and feeding heated oxidizer (HO) to a subsequent combustion zone (ZS) of the furnace (100). The method comprises feeding gaseous oxidizer (OX) to a cavity (115) arranged between an inner wall (110) of the furnace (100) and an outer wall (120) to heat the gaseous oxidizer (OX) in the cavity (115) to produce the heated oxidizer (HO). The method comprises using sulphur dioxide (SO₂) of flue gases receivable from the furnace (100) to produce the pulping chemical (PC). In the subsequent combustion zone (ZS) or downstream from the subsequent combustion zone (ZS) a temperature is 1000 °C to 1375 °C and an air-fuel equivalence ratio is at least 1.0 to reduce formation of sulphur trioxide (SOs). A pulping chemical is produced, the pulping chemical (PC) being sulphuric acid (H₂SO₄) or an alkali sulphite. A device for the performing the method.

## Description

### Technical field

The invention relates to methods and devices for producing a pulping chemical by combustion of sulphur and a malodorous substance to produce sulphur dioxide as an intermediate product, and upgrading the sulphur dioxide to the pulping chemical. Examples of pulping chemicals include sulphuric acid and alkali sulphite.

### Background

Pulping chemicals, in particular sulphuric acid and/or alkali sulphite, are needed in a pulp mill for the production of pulp. Such chemicals comprise sulphur. While at least some of the pulping chemicals can be recovered in the process, oftentimes not all sulphur is recovered. Thus, make-up chemicals are also needed. Such chemicals can be produced by burning sulphur. In addition, sulphur can be recovered from malodorous gases, which most often contain sulphur. Malodorous gases may be condensed to obtain a malodorous substance. Hereinafter the term malodorous substance refers to malodorous gas or condensate thereof.

While it is possible to burn sulphur and malodorous substances in separate burners, co-combustion of both sulphur and malodorous substances in a single device would provide for both economic and technical benefits.

There is therefore a need for a process for producing sulphur dioxide as an intermediate product by co-combustion of sulphur and malodorous substances, and for upgrading the sulphur dioxide to form the pulping chemical.

One problem in the co-combustion is the production of sulphur trioxide, which is a highly corrosive gaseous compound, which, if present in a large amount, would corrode the pipes or require extremely expensive materials.

Another problem related to co-combustion of sulphur and malodorous substances is the production of nitrogen oxides. Nitrogen oxides may be produced from the nitrogen gas of the combustion air if the combustion temperature is too high. In addition, if the malodorous substances contain nitrogen, also the malodorous substances may be a source for nitrogen oxides.

Furthermore the upgrading of SO₂ may be sensitive to the amount of carbon monoxide and/or oxygen in the gas containing the SO₂. Therefore, also the oxygen content and carbon monoxide content may need to be controlled.

### Summary

It has now been found how sulphur and malodorous substance can be burned in a same furnace such that the formation of sulphur trioxide (SO₃) is reduced. One of the issues affecting the formation of SOs is a proper temperature window for the combustion suitably far downstream from the location of feeding the sulphur in combination with a suitable air-fuel equivalence ratio in that region. The method is disclosed in more specific terms in independent claim 1. Gaseous oxidizer (e.g. air) and fuel feed can be automatically controlled by control valves based on measurements indicative of a temperature in the furnace. Oxidizer feed can be easily controlled when a compressor, a pump, or a fan may utilized to generate an overpressure for the oxidizer. The device is disclosed in more specific terms in independent claim 10. The invention also relates to a use of the device.

It has also been found that having a low oxygen content before the proper temperature range decreases the formation of SOs, because then there is only a sub-stochiometric amount of oxygen available. This also decreases the formation of NOx by keeping the combustion temperature reasonably low because of the low oxygen content.

Combustion of sulphur in a low air-fuel conditions has been found possible by feeding pre-heated oxidizer to the furnace. The oxidizer can be heated by using the heat of the furnace. Moreover, the pre-heating of oxidizer helps to maintain the proper temperature range in view of low SOs production.

Preferable embodiment are disclosed in the dependent claims and in the description including the figures.

### Brief description of the drawings

- Fig. 1a: shows an embodiment of the method and some features of the corresponding device,
- Fig. 1b: shows further details of the device of Fig. 1a,
- Fig. 1c: shows further process parameters of the method of Fig. 1a,
- Fig. 1d: shows an embodiment of the method and some features of the corresponding device, wherein the odorous substance and heated oxidizer are fed to furnace through different nozzles arranged apart from each other,
- Fig. 1e: shows the cross-section Ie-Ie of Fig. 1a, in particular the structure of the inner wall 110 in an embodiment,
- Fig. 2: shows an embodiment of the method and the device utilizing a fifth combustion zone,
- Fig. 3: shows a device having nozzles for feeding malodorous substance and heated oxidizer on both sides of the furnace,
- Fig. 4a: shows an embodiment of the method and the device utilizing a staging gun and a heat exchange element, the heat exchange element being part of a fire tube boiler,
- Fig. 4b: shows the cross end view IVb-IVb of Fig. 4a,
- Fig. 4c: shows an embodiment of the method and the device utilizing a staging gun and a heat exchange element, the heat exchange element being part of a fire tube boiler,
- Figs. 5a: and 5b show embodiments of the method and the device utilizing a staging gun and a heat exchange element, the heat exchange element being part of a fire tube boiler,
- Fig. 5c: shows an embodiment of the method and the device utilizing a staging gun arranged at an outlet of the furnace,
- Fig. 5d: shows an embodiment of the method and the device utilizing a staging gun having two separate staging outlets,
- Fig. 6a: shows an embodiment of the method and the device utilizing a staging gun and a heat exchange element, the heat exchange element being part of a fire tube boiler,
- Fig. 6b: shows an embodiment of the method and the device utilizing a staging gun and a heat exchange element, the heat exchange element being part a heat exchanger arranged in a flue gas channel,
- Fig. 7: shows and embodiment, wherein the flue gases are cooled by quenching upstream from an upgrading unit configured to produce the pulping chemical PC, and
- Fig. 8: shows and embodiment, wherein a means 130 for driving oxidizer to the cavity through the inlet 132 is configured to generate a negative gauge pressure within the furnace thereby driving the oxidizer to the cavity 115 by suction.

### Detailed description

In this description, the term air-fuel equivalence ratio refers to the proportional amount of oxygen fed to combustion process. The air-fuel equivalence is denoted by the symbol λ. The air-fuel equivalence ratio is normalized such that the air-fuel equivalence ratio λ equals 1, when the amount of oxygen fed to the process with combustible material (e.g. the sulphur and the malodorous substance) equals the stoichiometric amount of oxygen required by the combustible compounds to completely burn. Thus, when the air-fuel equivalence ratio λ equals 1, the combustion is referred to as stoichiometric combustion. Stoichiometric combustion occurs when all the oxygen is consumed in the reaction, and there is no molecular oxygen (O₂) in the products.

In this description, unless otherwise indicated, the term "pressure" refers to gauge pressure, i.e. pressure above the ambient pressure. Ambient pressure refers to the pressure outside of the furnace/device wherein the sulphur is burned. The unit Pa(g) is used for the pressure, i.e. gauge pressure. The unit is that of a Pascal (Pa), and the symbol (g) indicates it being a gauge pressure, i.e. above the ambient. A negative gauge pressure indicates a pressure lower than a the ambient pressure.

The term malodorous substance covers concentrated non-condensable gas (CNCG), stripper off gas (SOG), contaminated methanol (MeOH), chipping gas, and hydrogen sulphide (H₂S). Hydrogen sulphide may be collected from a sulphite pulp process. Concentrated non-condensable gas (CNCG) may be collected from a sulphate pulp process (i.e. a Kraft process). CNCG refers to gas collected from the processes other than a stripper, such as an evaporator area and/or a digester area. In view of this, in an embodiment, the malodorous substance OG comprises at least one of hydrogen sulphide (H₂S), methyl mercaptan (CH₃SH), dimethyl sulphide ((CH₃)₂SH), dimethyl disulphide ((CH₃)₂S₂), and turpentine (C₁₀H₁₆). SOG refers to stripper off gas collected from a stripper of a sulphate pulp/paper plant. SOG may be condensed to obtain methanol (MeOH). The methanol comprises contaminants, in particular malodorous contaminants, and is therefore a malodorous substance. In this way, the method relates to burning (i) elementary sulphur and (ii) a malodorous substance, in particular malodorous gas or a condensate thereof. Chipping gas refers to malodorous gas evaporating from wood chips. Wood chips may be produced using a chipper of the plant, and chipping gas may be collected from a heap of wood chips.

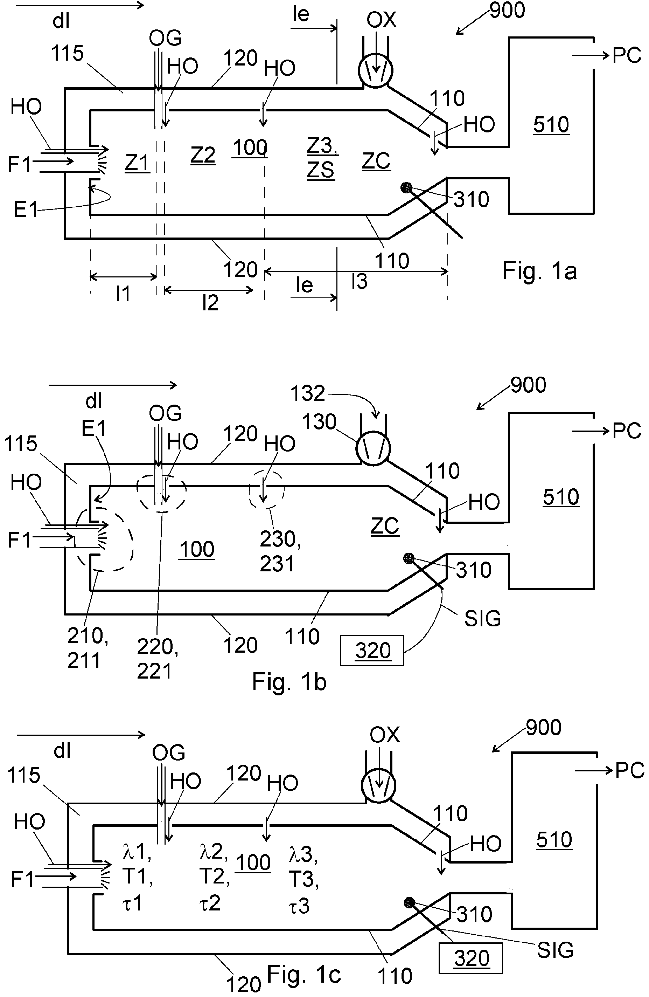

Figures 1a to 1c show a method and a device for burning sulphur and malodorous substance for the production of a pulping chemical PC. The term sulphur, when referring to the compound to that is burned, refers to elementary sulphur (i.e. elemental sulphur). In addition to elementary sulphur, auxiliary fuels can be burned. Such auxiliary fuels can comprise chemical compounds comprising sulphur. Some fuels may naturally comprise small amounts of elementary sulphur. The auxiliary fuel may be gas or oil, and it may be used particularly at a ramp-up phase of the furnace. However, after ramp-up the primary fuel F1 may substantially consist of elementary sulphur.

Figures 1a to 1c show a method for producing a pulping chemical PC by burning sulphur and malodorous substance OG. With reference to Fig. 1a, the method comprises feeding heated oxidizer HO and primary fuel F1 comprising elementary sulphur to a first combustion zone Z1 of a furnace 100. The primary fuel F1 may consist of substantially pure elementary sulphur. The primary fuel F1 may comprise e.g. at least 25 wt %, at least 50%, at least 75 wt%, or at least 90 wt% elementary sulphur. In addition to elementary sulphur, the primary fuel F1 may comprise auxiliary fuel. In particular, when the furnace 100 is being heated to a normal operation temperature, a lot of auxiliary fuel may be burned. Likewise, under normal operation temperature, the primary fuel F1 may comprise a lot of elementary sulphur, as discussed above.

The primary fuel F1, e.g. the elementary sulphur, is preferably fed in a liquid form. Elementary sulphur melts at a temperature of 115 °C. Thus, preferably a temperature of the primary fuel F1, before being fed to the furnace 100 is in the range 120 °C to 160 °C such as 125 °C to 140 °C. This ensures that the elementary sulphur is in the liquid state, but not excessively hot. In an embodiment, the primary fuel F1 is fed in the liquid state to the furnace 100.

As detailed below, the heated oxidizer HO becomes heated in a cavity 115 as a result of inner walls 110 allowing heat to transfer from the furnace 100 to the cavity. Preferably, a temperature of the heated oxidizer HO that is fed to the first combustion zone Z1 is 130 °C to 250 °C, more preferably 150 °C to 200 °C. This temperature has be found particularly suitable for burning elementary sulphur. On one hand, the sufficiently high temperature ensures that the cold oxidizer does not solidify the molten sulphur. On the other hand, too high temperature implies high heat transfer from the furnace and, correspondingly, lower temperature within the furnace. A lower temperature in the furnace implies slower combustion, resulting in more formation of SOs within the first combustion zone Z1.

The furnace 100 is limited by inner walls 110. Within the furnace 100, at least some of the sulphur of the primary fuel F1 is oxidized within the first combustion zone Z1. The materials within the first combustion zone Z1 are allowed to move to a second combustion zone Z2 of the furnace Z1. In other words, the second combustion zone Z2 is arranged downstream from the first combustion zone Z1 in the direction of flow of the flue gases within the furnace 100.

The materials within the first combustion zone Z1 include the primary fuel F1 and its reaction products with the heated oxidizer HO as well as the heated oxidizer HO and its reaction products with the primary fuel F1.

Concerning the term "combustion zone" hereinabove and hereinbelow the combustion zones are defined by the fuel/oxidizer feeds to the furnace 110. The primary fuel F1 and heated oxidizer HO are fed through a first nozzle arrangement 210 to a first end E1 of the furnace. Moreover, the malodorous substance OG and heated oxidizer HO are fed through a second nozzle arrangement 220 from a side of the furnace 100. The region between the first end E1 and the second nozzle arrangement 220 forms the first combustion zone Z1.

In the embodiment of Fig. 1a, further heated oxidizer HO and odorous substance OG are fed from substantially the same location. Therefore, they define the second combustion Z2, which extends from the point of feeding the heated oxidizer HO and odorous substance OG.

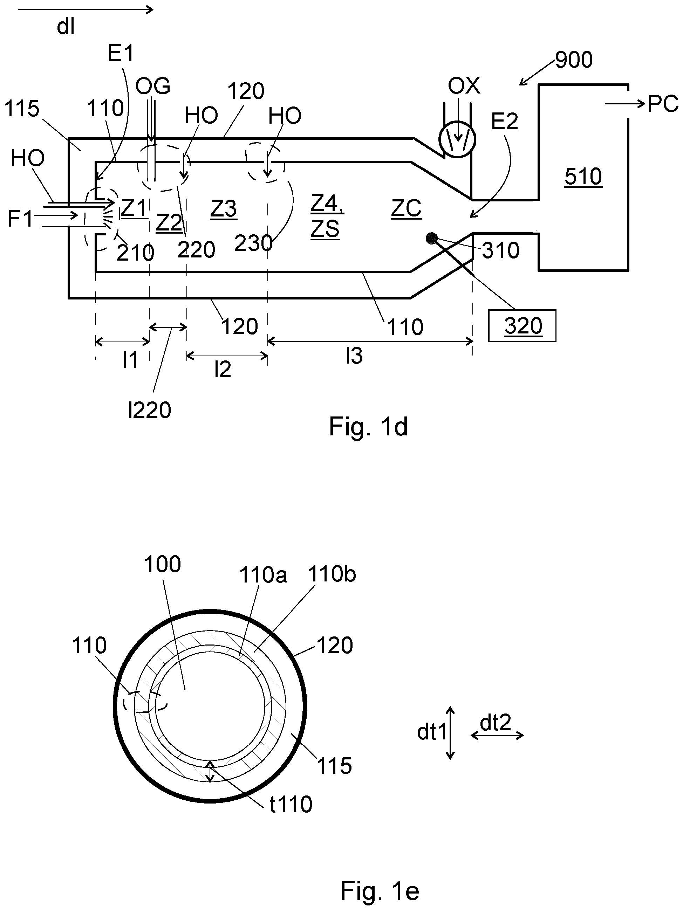

However, in the embodiment of Fig. 1d, the second nozzle arrangement 220 comprises separate nozzles for feeding (only) the malodorous substance OG and for feeding (only) the further heated oxidizer HO. As shown in Fig. 1d, therefore, the feeding of odorous substance defines the second combustion zone, and the feeding of the heated oxidizer defines a third combustion zone Z3.

Moreover, (only) heated oxidizer HO is fed through a third nozzle arrangement 230 from a side of the furnace 100. This forms a subsequent combustion zone. It is subsequent to the second combustion zone (as in Fig. 1a) or it is subsequent to the third combustion zone (as in Fig. 1d). The subsequent combustion zone therefore is a third combustion zone (Z3, as in Fid. 1a) or a fourth combustion zone (Z4, as in Fig. 1d). Naturally, there may be further points for feeding heated oxidizer to form even further combustion zones, whereby the subsequent combustion zone may be a fifth, sixth, seventh, or eighth combustion zone; or a combustion zone having an even larger number. The subsequent combustion zone is denoted by ZS in Figs. 1a and 1d to indicate this difference.

The method comprises feeding malodorous substance OG and heated oxidizer HO to the furnace 100. The malodorous substance OG and the heated oxidizer HO are fed through the second nozzle arrangement 220. As detailed above, the feeding of the malodorous substance OG and the heated oxidizer HO through the second nozzle arrangement 220 defines at least the second combustion zone Z2. However, it may define both the second and the third combustion zones Z2 and Z3; or a lager number of combustion zones. Thus, in the method, the malodorous substance OG and the heated oxidizer HO are fed to the furnace to form at least the second combustion zone Z3.

The materials within the second combustion zone Z2 are allowed to move to the subsequent combustion zone ZS of the furnace 100. In other words, the subsequent combustion zone ZS is arranged downstream from the second combustion zone Z2 in the direction of flow of flue gases in the furnace 100. Referring to what has been said above, the subsequent combustion zone is subsequent to the third combustion zone Z3, if the feeding of the heated oxidizer and the malodorous substance through the second nozzle arrangement 220 defines the third combustion zone. However, if the feeding of the heated oxidizer and the malodorous substance through the second nozzle arrangement 220 defines only the second combustion zone, the subsequent combustion zone is subsequent to the second combustion zone Z2. In both cases, the subsequent combustion ZS starts from the third nozzle arrangement 230 and extends downstream therefrom.

The materials within the second combustion zone Z2 include the primary fuel F1 and its reaction products with the heated oxidizer HO. In addition, if the second combustion zone extends from a position of feeding the malodorous substance OG to the furnace, materials within the second combustion zone Z2 further include the malodorous substance OG and its reaction products with the heated oxidizer HO and/or with the reaction products of the primary fuel F1 and/or with the primary fuel F1; and the heated oxidizer HO and its reaction products with the malodorous substance OG and/or with the reaction products of the primary fuel F1 and/or with the primary fuel F1. In the method, the malodorous substance OG is collected from a pulp mill.

The method comprises feeding heated oxidizer HO to the subsequent combustion zone ZS (such as Z3 or Z4, as discussed above) of the furnace 100. Sulphur dioxide SO₂ is produced in the combustion zones Z1, Z2, Z3, Z4 as a result of burning the primary fuel F1 and the malodorous substance. In the method, this the sulphur dioxide is used to produce the pulping chemical PC. Thus, the method comprises using sulphur dioxide (SO₂) of flue gases receivable from the furnace 100 to produce the pulping chemical PC. The flue gases receivable from the furnace 100 may be received e.g. from the subsequent combustion zone ZS through an outlet 432 of the furnace and through a flue gas channel 410. Thus, the method comprises using sulphur dioxide (SO₂) of flue gases receivable from the subsequent combustion zone ZS of furnace 100 to produce the pulping chemical PC. The pulping chemical refers to sulphuric acid (H₂SO₄) or an alkali sulphite. The term alkali sulphite refers to a sulphite of an element selected from the group I of the group II of the periodic table of elements. Examples of alkali sulphites include sodium sulphite (Na₂SO₃), potassium sulphite (K₂SO₃), calcium sulphite (CaSOs), and magnesium sulphite (MgSOs).

An embodiment of the method comprises using the pulping chemical PC to produce pulp in the pulp mill. Moreover, in an embodiment, the malodorous substance, which is collected from the pulp mill, is collected from the same pulp mill in which the pulping chemical PC is used to produce pulp. In addition to producing pulp, also paper may be produced in the pulp mill.

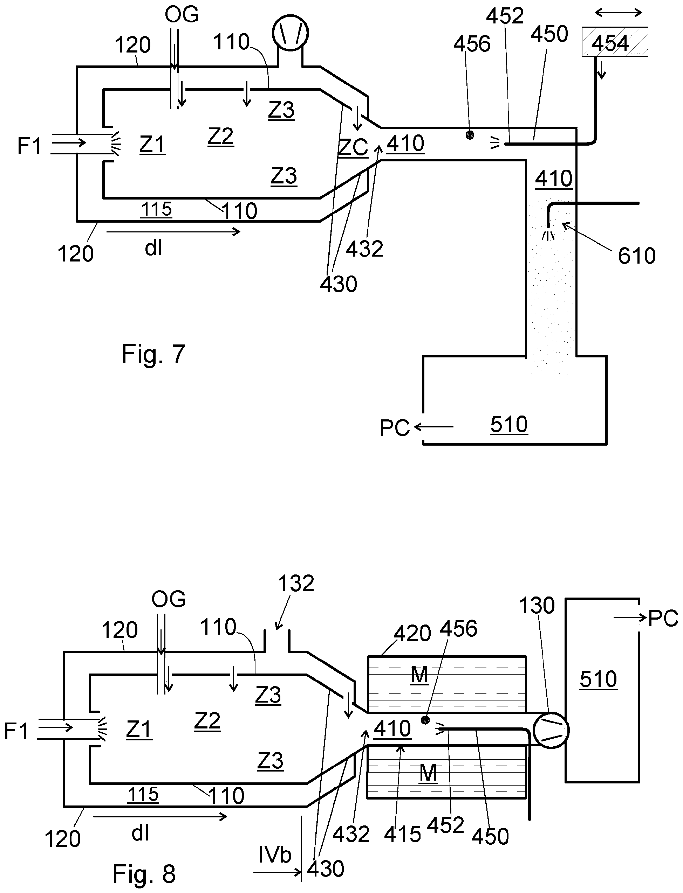

In the method, the heated oxidizer HO is produced by heating gaseous oxidizer OX in a cavity 115. The cavity 115 receives heat through the inner wall 110 of the furnace 100. For this reason, the method comprises feeding gaseous oxidizer OX to the cavity 115 arranged between the inner wall 110 of the furnace 100 and outer wall 120. An embodiment comprises feeding gaseous oxidizer OX to the cavity 115 by using a means 130 for driving gaseous oxidizer OX to the cavity 115. The means 130 may be e.g. a compressor, a pump, or a fan. By using the means 130, the oxidizer in the cavity 115 may become pressurized as depicted in Figs. 1a to 4c and 6 to 7. In the alternative, the means 130 for driving gaseous oxidizer OX may be configured to generate a reduced pressure into the furnace, whereby the gaseous oxidizer OX becomes guided to the cavity 115 through an oxidizer inlet 132 by suction, as shown in Fig. 8. This helps controlling the feed of heated oxidizer to the furnace 100.

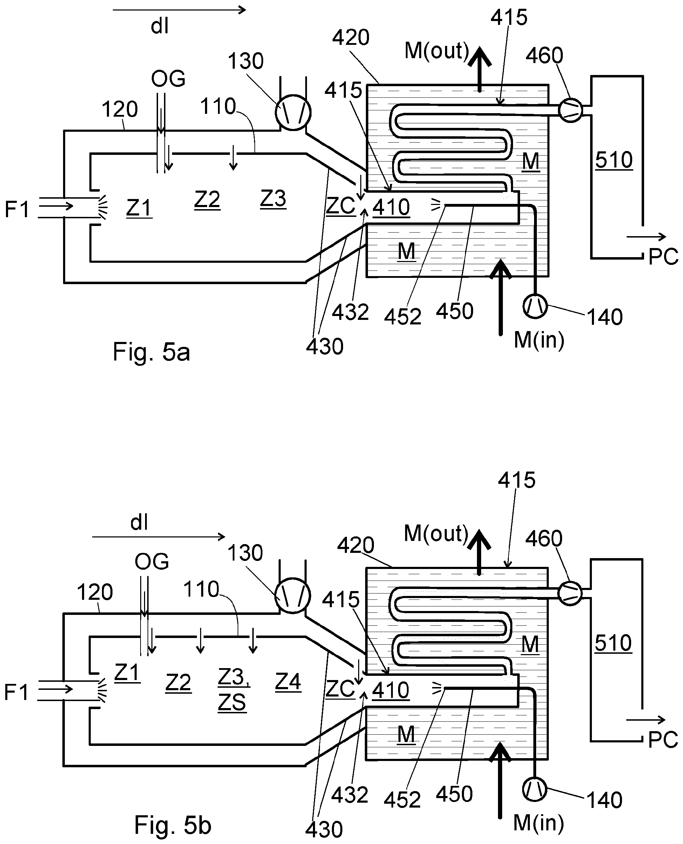

It is noted that in the embodiments of Figs. 5a to 5d, the gauge pressure in the furnace may be positive or negative, depending on how the means 130 for driving gaseous oxidizer OX to the cavity 115 and the secondary means 460 for driving flue gas FG to the upgrading unit 510 from the furnace 100 or from the flue gas channel 410 are operated in combination. As readable from Figs. 5a to 5d and 8, in the embodiment of Fig. 8, the means 130 for driving gaseous oxidizer OX to the cavity 115 performs also the same function as the secondary means 460 (shown in Figs. 5a to 5d) for driving flue gas FG to the upgrading unit 510 from the furnace 100 or from the flue gas channel 410. In Fig. 8, the gaseous oxidizer OX becomes guided to the cavity 115 through an oxidizer inlet 132 only by suction; whereas in Figs. 5a to 5d, the flow of the gaseous oxidizer OX to the cavity 115 is enhanced by the means 130, even if the secondary means 460 therein may generate suction.

If the oxidizer in the cavity 115 is pressurized (i.e. a gauge pressure in the cavity is positive), the oxidizer in the cavity 115 need not be pressurized to a high pressure. As an example, a pressure in the cavity 115, in particular immediately after the means 130, may be at most 5000 Pa(g) or at most 4000 Pa(g), such as 2500 Pa(g) to 5000 Pa(g) or 2500 Pa(g) to 4000 Pa(g). It has been found that such a level of overpressure is sufficient for properly controlling the operation of the furnace by means of the controllable nozzles of various nozzle arrangements (210, 220, 230).

If the oxidizer in the cavity 115 is in a reduced pressurized (i.e. a gauge pressure in the cavity is negative), the oxidizer in the cavity 115 need not be very low. As an example, a pressure in the region of the furnace wherein the temperature is 1000 °C to 1375 °C and the air-fuel equivalence ratio is at least 1.0 may be at least minus 50 Pa(g). Having a reduced pressure in the furnace has the benefit that in case of system failure, the malodorous gases will not escape the furnace. Instead air from the surroundings will be sucked into the furnace for use as the oxidizer.

Herein the term gaseous oxidizer refers to a gaseous compound comprising at least 19 mol-% oxygen. From a technical viewpoint, air is a gaseous composition comprising 78 mol-% nitrogen and 21 mol-% oxygen and further comprises other gases. Therefore, the gaseous oxidizer may consist of air or comprise air. The gaseous oxidizer OX may comprise a mixture of air and oxygen. The gaseous oxidizer OX may comprise air and diluted non-condensable gases receivable from the pulp process. The gaseous oxidizer OX may consist of diluted non-condensable gases (DNCG) receivable from the pulp process. It is also possibly to use, at a first instance of time, only DNCG as the gaseous oxidizer, and at a second instance of time to use a mixture of air and DNCG as the gaseous oxidizer. Naturally, if the gaseous oxidizer is a mixture of several gaseous compounds, these gaseous compounds may be fed to the cavity (i) all through a single inlet or (ii) by feeding each component through separate inlets.

Having the cavity 115, which receives the oxidizer (not heated) and heats the oxidizer has the further technical effect that the inner wall 110 can be made thinner than in solutions not comprising the outer wall 120 and the cavity. Suitable materials and thicknesses thereof are discussed later.

It has been found that occasionally sulphur trioxide (SO₃) may form, if the combustion process is not well controlled. However, SOs rapidly corrodes the piping, at least when its concentration is reasonably large, whereby the production of SOs should be prevented, or at least controlled. In particular, it has been found that at a certain temperature range SOs is not formed, and even some SOs may convert back to SO₂.

Thus, in the method, in the subsequent combustion zone ZS or downstream from the subsequent combustion zone ZS, a temperature is 1000 °C to 1375 °C and an air-fuel equivalence ratio is at least 1.0, preferably 1.0 to 1.4. More preferably, in the subsequent combustion zone ZS or downstream from the subsequent combustion zone ZS, a temperature is 1000 °C to 1375 °C and an air-fuel equivalence ratio is 1.1 to 1.3; more preferably 1.15 to 1.25 (in combination with the temperature range). This combination of temperature and air-fuel equivalence ratio has the effect of reducing formation of sulphur trioxide SOs. Naturally, the more preferable air-fuel equivalence ratios have improved effect of reducing formation of sulphur trioxide SO₃.

As defined earlier, the term air-fuel equivalence ratio relates to a ratio of oxygen and fuel, whereby the term is used even if the oxidizer would e.g. consist of CNCG or comprise CNCG. The presence or amount of air as such is irrelevant for the air-fuel ratio.

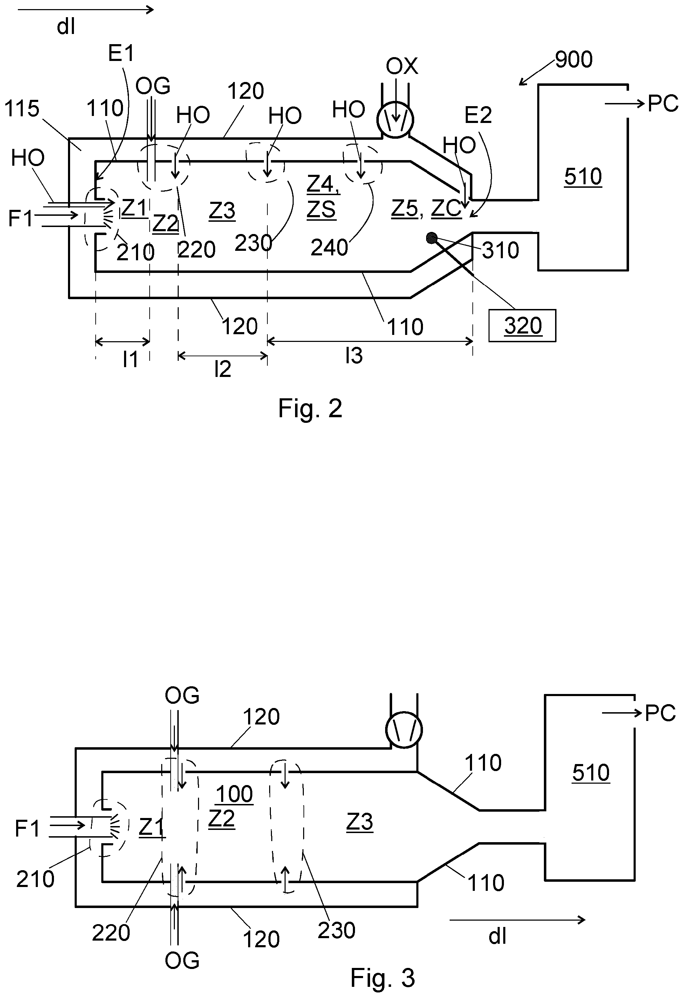

In terms of an average temperature, in an embodiment of the method, in the subsequent combustion zone ZS or downstream from the subsequent combustion zone ZS, an average temperature is 1000 °C to 1100 °C and an air-fuel equivalence ratio is at least 1.0, preferably 1.0 to 1.4, such as 1.1 to 1.3 or 1.15 to 1.25. This air-fuel equivalence ratio may occur e.g. within a cooling region ZC of the subsequent combustion zone ZS, as depicted in Fig. 1c. This air-fuel equivalence ratio may occur e.g. within a cooling region ZC of a further combustion zone, as depicted in Figs. 2 and 5b.

In addition to the temperature and the air-fuel equivalence ratio, the residence time, too, affects the amount of SOs produced in the process. Thus, an embodiment comprises feeding the primary fuel F1, the odorous substance OG, and the heated oxidizer HO to the furnace 100 in such a way that combustion products of the primary fuel remain in the region wherein the temperature is 1000 °C to 1375 °C and the air-fuel equivalence ratio is at least 1.0, such as 1.0 to 1.4 (such as 1.1 to 1.3 or 1.15 to 1.25) for a residence time. The residence time is preferably at least 0.5 seconds, such as 0.5 to 2 s. The amounts per unit time of the primary fuel F1, the odorous substance OG, and the heated oxidizer HO, in relation to a cross-sectional area of the furnace 100 affect the flow velocity with in the furnace. Moreover, the length of the furnace in combination with the flow velocity with in the furnace affect the residence time.

In addition to the temperature and the air-fuel equivalence ratio, the pressure may affect the process. However, as detailed above, the pressure is preferably substantially atmospheric. Naturally the gauge pressure in the furnace 100 is different from than in the cavity 115. In an embodiment, a gauge pressure in the region wherein the temperature is 1000 °C to 1375 °C and the air-fuel equivalence ratio is at least 1, such as 1.1 to 1.4 is at most 500 Pa(g) and preferably at least minus 50 Pa(g). The gauge pressure there may be e.g. -50 to 250 Pa(g) or -50 to 200 Pa(g).

Typically, the temperature in the first combustion zone Z1 is much higher than what prevents the formation of SOs. However, even if some SOs would be produced in the first combustion zone Z1, it could convert back to SO₂ in the suitable temperature range as discussed above. Moreover, in the first combustion zone Z, the formation of SOs can be reduced by using only a little oxygen, i.e. a low air-fuel equivalence ratio.

Therefore, an embodiment comprises feeding heated oxidizer HO and the primary fuel F1 to the furnace 100 such that an air-fuel equivalence ratio (λ1) in the first combustion zone Z1 is less than 0.95. Figure 1c shows schematically the air-fuel equivalence ratios (λ1, λ2, λ3) within the different zones, in particular the first three zones Z1, Z2, Z3. Preferably, the heated oxidizer HO is also fed in such a way that a temperature in the subsequent combustion zone ZS or downstream from the subsequent combustion zone ZS does not exceed 1500 °C.

Thus, an embodiment comprises feeding the primary fuel F1 and the heated oxidizer HO to the first combustion zone Z1 of the furnace 100 in such a way that a temperature T₁ in the first combustion zone Z1 is 1400 to 1800 °C, and an air-fuel equivalence ratio λ₁ in the first combustion zone Z1 is at most 0.9, such as 0.6 to 0.9. Preferably, the primary fuel F1 and the heated oxidizer HO are fed to the first combustion zone Z1 such that a residence time τ1 of the compounds within the first combustion zone is 0.1 to 0.3 seconds. A short residence time in the first zone Z1 also prevents formation of SOs, since the time for reactions remain short.

However, even if the air-fuel equivalence ratio λ₁ in the first combustion zone Z1 is low, preferably a lot of heated oxidizer is fed to the first combustion zone Z1. Preferably, heated oxidizer HO is fed to the furnace 100 in such a way that 40 mol-% to 60 mol-% of the total amount of oxidizer (heated or not) that is fed to the furnace or downstream therefrom, is fed to the first combustion zone Z1. For example, in an embodiment, heated oxidizer is fed to the combustion zones (e.g. Z1, Z2, Z3) of the furnace, and oxidizer (e.g. air, not necessarily heated) is fed through a staging gun 450 to a combustion zone arranged in a flue gas channel. However, 40 mol-% to 60 mol-% of the total amount of oxidizer is fed to the first combustion zone Z1.

This affects the temperature downstream from the first combustion zone Z1, because in this way a lot of the reactions takes place already in the first combustion zone Z1, which helps to achieve the proper temperature range discussed above.

Having sub-stoichiometric conditions in the first combustion zone Z1 also reduces the formation of nitrogen oxides NOx, which is beneficial for environmental reasons.

In addition to the low air-fuel equivalence ratio within the first combustion zone in connection with the temperature and optionally with the residence time therein, also the way the primary fuel F1 and the heated oxidizer HO are fed to the first combustion zone Z1 affects the combustion process. Preferably, a lot of the reactions take place in the first combustion zone Z1, as limited e.g. by the amount of oxygen. To enable as complete combustion as possible, preferably, the primary fuel F1 and the heated oxidizer HO are fed to the first combustion zone Z1 such that they form a turbulent flow within the first combustion zone Z1. This can be achieved e.g. by using a high-intensity burner. The turbulent flow improves the mixing within the first combustion zone thereby accelerating the combustion process within the first combustion zone.

In an embodiment, a temperature of the flue gases needs to be reduced to obtain the preferably temperature window of 1000 °C to 1375 °C discussed above. Thus, the subsequent combustion zone ZS may comprise a reaction zone and a cooling region ZC. In Fig. 1a, the reaction zone of the subsequent combustion zone ZS is arranged between the cooling region ZC and the second combustion zone Z2. A purpose of the reaction zone is to allow the heated oxidizer HO (which is fed to the subsequent combustion zone ZS) to further oxidize the flue gases within the reaction zone. A purpose of the cooling region ZC is to cool down the flue gases to the temperature range which is beneficial in terms of preventing formation of SOs. For this reason, the cooling region ZC may be laterally surrounded by a part of the cavity 115 as depicted in Figs. 1a to 1c. Thus, the oxidizer, when fed to the cavity 115, exchanges heat particularly with the flue gases in the cooling region ZC thereby cooling the gases in the cooling region ZC and providing for the proper temperature range. In this way, in an embodiment, the cavity 115 serves for three purposes:
(1) heating the oxidizer to enable sub-stoichiometric combustion at a high temperature at least in the first combustion zone Z1,
(2) cooling the flue gases of the cooling region ZC, and
(3) in its part, thermally insulating furnace 100 from the exterior, whereby less thermal insulation properties of the inner wall 110 are needed.

The cooling region ZC does not need to be part of the third combustion zone Z3; it may be a part of a subsequent combustion region.

Concerning the aspect of cooling (see 2 above), the cooling should be sufficient, whereby the inner wall 110 should not be too thick. However, the inner wall 110 should both (i) be sufficiently resistant to high temperature in the furnace as well as the corrosive environment resulting from burning sulphur, and (ii) sufficiently thermally insulate furnace 110 from the cavity 115 to ensure sufficiently high temperature in particular in the first combustion zones Z1.

For these reasons, in an embodiment, the inner wall 110 comprises an inner layer 110a and an outer layer 110b. Reference is made to Fig. 1e.

In an embodiment, the inner layer 110a comprises fire-proof bricks. Fire-proof bricks are resistant to temperatures of 1500 °C and above, such as 1600 °C and above (e.g. up to about 1700 °C). In this way, the inner layer 110a is resistance to the high temperatures of the furnace 110. However, fire-proof bricks have a reasonably high thermal conductivity. Typically, a fire-proof brick has a thermal conductivity of more than 1 W/m.K (Watts per metre-Kelvin), measured at 300 °C, e.g. more than 2 W/m.K (Watts per metre-Kelvin), measured at 300 °C. Thus, fire-proof bricks alone would not sufficiently thermally insulate the furnace 100, or at least a very thick wall would be needed.

Therefore, the outer layer 110b comprises thermally insulating bricks. As for thermally insulating bricks, a thermal conductivity of a thermally insulating brick may be e.g. most 70 % or at most 50 % of a thermal conductivity of the fire-proof brick of the inner layer 110a, both thermal conductivities measured at a same temperature, e.g. 300 °C For example, if the thermal conductivity of the fire-proof brick of the inner layer would be 2 W/m·K, a thermally insulating brick of the outer layer could be at most 1.4 W/m.K or at most 1 W/m.K. Naturally, the thermal conductivity of the thermally insulating brick of the outer layer could be much less. The thermal conductivities can be affected by material selections.

To provide for sufficient thermal resistance between the furnace 100 and the cavity 115, in an embodiment, a thickness t110 of the inner wall 110, i.e. a total thickness of the inner layer 110a and the outer layer 110b, is 150 mm to 250 mm. The thickness of the outer layer 110b may be e.g. 50 % to 90 % of the thickness t110 of the inner wall.

The thickness of the inner wall and the materials of the inner and outer layers are preferably selected such that thermal energy properly flows through the inner wall 110 from the furnace 100 to the cavity 115. As for what constitutes a proper flow, as detailed above, preferably, a temperature of the heated oxidizer HO that is fed to the first combustion zone Z1 (from the first end E1 of the furnace) is 130 °C to 250 °C, more preferably 150 °C to 200 °C. Naturally, the temperature in the cavity 115 at the first end E1 is within these limits, too. Further details will be given below.

Concerning the device 900, Figs. 1a to 1d also relate to a device 900 for producing a pulping chemical PC by burning elementary sulphur and malodorous substance OG.

The device 900 comprises the inner wall 110 limiting the furnace 100. The furnace 100 has an elongated shape. The shape is elongated in the sense that furnace 100 has a length that is greater than a diameter of the furnace 100. A cross-section of the furnace 100 is does not need to be circular. Thus, the term "diameter" refers to a maximum distance between the points of the border of a cross section of the furnace, a normal of the cross section being in a longitudinal direction. Preferably, the cross-section of the furnace 100 is circular. Thus, a part of the furnace may be cylindrical. The length of the furnace defines the longitudinal direction dl of the furnace. The length is in the longitudinal direction dl. The longitudinal direction dl is shown e.g. in Figs. 1a to 1d.

The device 900 comprises an outer wall 120 limiting the cavity 115 for heating gaseous oxidizer OX and for conveying heated oxidizer HO to the furnace 100. The cavity 115 is arranged between the inner wall 110 and the outer wall 120. The device 900 comprises an oxidizer inlet 132 for letting in gaseous oxidizer OX to the cavity 115; and means 130, such as a compressor, a pump, or a fan, for driving gaseous oxidizer OX through the oxidizer inlet 132 to the cavity 115. Reference is made particularly to Figs. 1b and 8. In the embodiment of Fig. 1b, the means 130 is configured to generate an overpressure (i.e. a positive gauge pressure) to the cavity 115 and the furnace 100. In the embodiment of Fig. 8, the means 130 is configured to generate an underpressure (i.e. a negative gauge pressure) to the cavity 115 and the furnace 100.

The device 900 further comprises a first nozzle arrangement 210 arranged at a first end of the furnace 100. The first nozzle arrangement 210 is configured to feed to the furnace 100 heated oxidizer HO from the cavity and primary fuel F1. As for the content of the primary fuel, reference is made to what has been said in connection with the method. The primary fuel F1 may be in the liquid state.

The device 900 further comprises a second nozzle arrangement 220 arranged at a side or sides of the furnace 100. More specifically, parts of the second nozzle arrangement 220 may be spaced in the longitudinal direction dl, as discussed above. Furthermore, parts of the second nozzle arrangement may be laterally spaced. However, not even a part of the second nozzle arrangement 220 is arranged at the first end E1 of the furnace; and not even a part of the second nozzle arrangement 220 is arranged at the second end E2 of the furnace. The second nozzle arrangement 220 is configured to feed to the furnace 100 heated oxidizer HO from the cavity and malodorous substance OG. The second nozzle arrangement 220 is arranged at a side of the furnace 100 to form a suitable large first combustion zone Z1. Considering the size of the first combustion zone Z1 in view of proper residence times within that zone, in an embodiment, the second nozzle arrangement 220 is arranged at a first distance I1 from the first end E1 of the furnace in the longitudinal direction dl. The first distance I1 is shown in Figs. 1a, 1d, and 2. The first distance I1 may be 750 mm - 3 000 mm.

A length I220 of the second nozzle arrangement, as measured in the longitudinal direction dl, depends on the how far the location of feeding heated oxidizer HO is from the location of feeding the malodorous substance OG. If they are fed from substantially the same location, as in Fig. 1a, the length I220 would be substantially zero. However, is they are fed from different locations, as in Fig. 1d, the length I220 is greater. If the second nozzle arrangement is configured to feed the malodorous substance OG to a first location and the heated oxidizer HO to a second, different location (as in Fig. 1d), the malodorous substance OG is preferably fed upstream from the second location to which the heated oxidizer is fed. This ensures highly reductive combustion conditions in the first and the second combustion zones Z1, Z2. In such a case the length I220 of the second nozzle arrangement is preferably at most 75% or at most 50 % of the second distance I2. Herein the second distance I2 refers to the distance between the second nozzle arrangement 220 and the third nozzle arrangement 230.

Referring to Figs. 1d and 2a, the second nozzle arrangement 220 may comprise separate nozzles for feeding (only) the malodorous substance OG and for feeding (only) the heated oxidizer HO. These may further be arranged a distance apart from each other, as shown in Figs. 1d and 2a. As shown therein, the nozzles for feeding (only) the malodorous substance OG are arranged closer to the first end E1 that the nozzles for feeding (only) the heated oxidizer HO. However, referring to Figs. 1a-1c, the nozzles of the second nozzle arrangement 220 may each be arranged substantially equally far from the first end E1.

The device 900 further comprises a third nozzle arrangement 230 arranged at a side or sides of the furnace 100. More specifically, parts of the third nozzle arrangement 230 may be spaced in the longitudinal direction dl, in a manner similar to the nozzles of the second nozzle arrangement 220. Furthermore, parts of the third nozzle arrangement 230 may be laterally spaced. However, not even a part of the third nozzle arrangement 230 is arranged at the first end E1 of the furnace; and not even a part of the third nozzle arrangement 220 is arranged at the second end E2 of the furnace. Concerning the latter, this provides for a cooling region ZC as detailed below. The third nozzle arrangement 230 is arranged further away from the first end E1 than the second nozzle arrangement 220. Thus a distance between the third nozzle arrangement 230 and the first end E1 is greater than a distance between the second nozzle arrangement 220 and the first end E1. In other words, the third nozzle arrangement 230 is arranged downstream from the second nozzle arrangement 220 as measured in the direction of flow of flue gases within the furnace 100. However, the second and third nozzle arrangements (220, 230) may both be arranged on several sides of the furnace, as depicted in Fig. 3. Alternatively, the second and third nozzle arrangements (220, 230) may be arranged on only different sides of the furnace 100 (not shown).

The third nozzle arrangement 230 is configured to feed to the furnace 100 heated oxidizer HO from the cavity 115. Considering the size(s) of the combustion zone(s) that are upstream from the subsequent combustion zone ZS (as detailed above, these include the second combustion zone Z2 and may include the third combustion zone Z3) in view of proper residence times within that/those zone(s), in an embodiment, the third nozzle arrangement 230 is arranged a second distance I2 from the second nozzle arrangement 220, as measured in the longitudinal direction dl. The second distance I2 is shown in Figs. 1a, 1d, and 2. The second distance I2 may be 1500 mm - 4 500 mm. The second distance I2 may be e.g. 50 % to 200 % of a sum of the first distance I1 and the length I220 of the second nozzle arrangement 220.

As detailed in the context of the method, a proper temperature range should be present within the subsequent combustion zone ZS or downstream therefrom. In practice, to obtain such a temperature range, the combustion process should be controlled. Because of the means 130 for driving gaseous oxidizer OX through the oxidizer inlet 132 to the cavity 115, the feed of heated oxidizer HO can be controlled by control nozzles. In a similar manner the feed of the primary fuel F1 and/or the malodorous substance OG can be controlled by a control nozzle. A control nozzle is controllable such that the flow through the nozzle can be limited. E.g. an orifice of the nozzle can be opened, closed, or partially open to any degree.

Thus, in the device 900
- a first nozzle 211 of the first nozzle arrangement 210 is controllable for controlling the amount of heated oxidizer HO or primary fuel F1 that is fed to the furnace through the first nozzle, and/or
- a second nozzle 221 of the second nozzle arrangement 220 is controllable for controlling the amount of heated oxidizer HO or malodorous substance OG that is fed to the furnace through the second nozzle 221, and/or
- a third nozzle 231 of the third nozzle arrangement 230 is controllable for controlling the amount of heated oxidizer HO that is fed to the furnace through the third nozzle 231.

Naturally, several nozzles of the first nozzle arrangement 210 may be controllable for controlling the amount of heated oxidizer HO and primary fuel F1 that are fed to the furnace through the first nozzle arrangement. Naturally, several nozzles of the second nozzle arrangement 220 may be controllable for controlling the amount of heated oxidizer HO and malodorous substance OG that are fed to the furnace through the second nozzle arrangement.

Moreover, to control at least one of these nozzles, the device 900 comprises a first sensor 310, and a control unit 320. The first sensor 310 is configured to give information indicative of a temperature. The first sensor 310 is arranged to give information indicative of a temperature at a location of the third nozzle arrangement 230 or downstream therefrom. As detailed in the context of the method, the proper temperature is arranged within the third combustion zone or downstream therefrom. When the first sensor 310 is arranged as disclosed above, it can be used to determine temperature from such a region wherein the temperature is, or at least should be, within the proper range to reduce the formation of SOs.

In case the first sensor 310 is based on pyrometry, the first sensor may give information of a temperature at another location than the one where the first sensor 310 is arranged. Some other types of sensors give information on the temperature at the vicinity of the sensor itself. The first sensor 310 may be arranged to a location of the third nozzle arrangement 230 or downstream therefrom.

The control unit 320 is configured to control, based on a signal received from the first sensor 310, at least one of the first nozzle 211, the second nozzle 221, and the third nozzle 231.

Furthermore, the device 900 comprises an upgrading unit 510 configured to produce the pulping chemical PC using sulphur dioxide SO₂ of flue gases receivable from the furnace 100. The pulping chemical PC is sulphuric acid or an alkali sulphite. For further details on the pulping chemicals, reference is made to what has been said in the context of the method.

As for the size of the furnace, as will be detailed below, the furnace 100 may comprise further combustion zones. Thus, the size of the subsequent combustion zone ZS alone is not very relevant. However, the size of the furnace, as measured from the third nozzle arrangement 230 to the second end E2 of the furnace may be relevant for providing a sufficiently long cooling region ZC. For these reasons, in an embodiment, a distance between the third nozzle arrangement 230 and the second end E2 of the furnace equals a third distance I3, shown in Figs. 1a, 1d, and 2. The third distance I3 may be e.g. at least 3 000 mm, such as at least 5 000 mm. As for the suitable upper values, the third distance I3 may be e.g. at most 12 000 mm, such as at most 10 000 mm. In relation to the second distance I2, the third distance I3 may be e.g. at least two times the second distance I2.

The method may be performed e.g. by using the device 900. To burn the sulphur, such a use comprises:
- operating the means 130 for driving oxidizer OX to drive oxidizer OX through the oxidizer inlet 132 to the cavity 115;
- feeding heated oxidizer HO from the cavity 115 and feeding the primary fuel F1 through the first nozzle arrangement 210 to the furnace 100;
- feeding heated oxidizer HO from the cavity 115 and the malodorous substance OG through the second nozzle arrangement 220 to the furnace 100; and
- feeding heated oxidizer HO from the cavity through 115 the third nozzle arrangement 230 to the furnace 100.

To form suitable temperature range in view of low formation SOs, the use comprises:
- measuring a signal SIG indicative of a temperature using the first sensor 310 and transmitting the signal SIG to the control unit 320;
- controlling, by using the control unit 320 and based on the signal SIG received from the first sensor 310, at least one of the first nozzle 211 of the first nozzle arrangement 210, the second nozzle 221 of the second nozzle arrangement 220, and the third nozzle 231 of the third nozzle arrangement 230, such that in the third combustion zone Z3 or downstream from the third combustion zone a temperature is 1000 °C to 1375 °C and an air-fuel equivalence ratio is at least 1.0, such as 1.0 to 1.4.

Moreover, to produce the pulping chemical PC, the use comprises:
- producing sulphuric acid or an alkali sulphite with the upgrading unit 510.

As discussed above, a part of the subsequent combustion zone ZS may form a cooling region ZC. In the alternative, the cooling region ZC may be part of another combustion zone. The cooling in the cooling region ZC is very efficient, when a part of the cavity 115 laterally surrounds the cooling region ZC. This is beneficial for forming a proper temperature range to reduce formation of SOs. In an embodiment, a part of the cavity 115 laterally surrounds a cooling region ZC of the furnace 100. Moreover, in that embodiment, the cooling region ZC is arranged, in a direction of flow of the flue gases in the furnace, as a part of the subsequent combustion zone ZS or downstream therefrom.

Preferably, in such an embodiment, the furnace has a longitudinal direction dl. Namely, the furnace 100 has a length that is greater than a diameter of the furnace 100. The length defines the longitudinal direction dl in such a way that the length is directed in the longitudinal direction. The positive and negative longitudinal directions are defined such that the second nozzle arrangement 220 is arranged in the positive longitudinal direction +dl from the first end E1 of the furnace 100. Reference is made to Fig. 1b.

In the embodiment, the oxidizer inlet 132 and the second nozzle arrangement 220 are arranged relative to each other such that the oxidizer (or heated oxidizer) flowing in the cavity 115 from the oxidizer inlet 132 to the second nozzle arrangement 220 flows at least in the negative longitudinal direction - dl. Reference is made to Figs. 1a to 1d. By definition, the negative longitudinal direction -dl is reverse to the longitudinal direction dl, which is a positive longitudinal direction dl.

The embodiment of the method involving the oxidizer-cooled cooling region ZC comprises feeding the primary fuel F1 and the heated oxidizer HO to the first combustion zone Z1 of the furnace 100 from the first end E1 of the furnace 100 through the first nozzle arrangement 210. The embodiment further comprises feeding the malodorous substance OG and the heated oxidizer HO to the furnace 100 from a side of the furnace 100 through the second nozzle arrangement 220. The embodiment comprises feeding the heated oxidizer HO the subsequent combustion zone ZS of the furnace 100 from a side of the furnace 100 through a third nozzle arrangement 230, and feeding gaseous oxidizer OX to the cavity 115 through the oxidizer inlet 132. As readable from the above, also the heated oxidizer HO is gaseous, because it is formed by heating gaseous oxidizer OX.

In the embodiment, the second nozzle arrangement 220 is arranged in the positive longitudinal direction +dl from the first end E1 of the furnace 100. In addition, the third nozzle arrangement 230 is arranged in the positive longitudinal direction +dl from the second nozzle arrangement 220. Moreover, to form the cooling region ZC, the oxidizer inlet 132 and the third nozzle arrangement 230 are arranged relative to each other such that the oxidizer flowing in the cavity 115 from the oxidizer inlet 132 to the third nozzle arrangement 230 flows at least in the negative longitudinal direction -dl. As shown in Figs. 1a to 1d, the oxidizer inlet 132 and the second nozzle arrangement 220 are arranged relative to each other such that the oxidizer flowing in the cavity 115 from the oxidizer inlet 132 to the second nozzle arrangement 220 flows at least in the negative longitudinal direction -dl. In this way, in this embodiment the flue gases in the furnace 110 flow substantially in a direction that is reverse to the direction in which the heated oxidizer flows in the cavity 115.

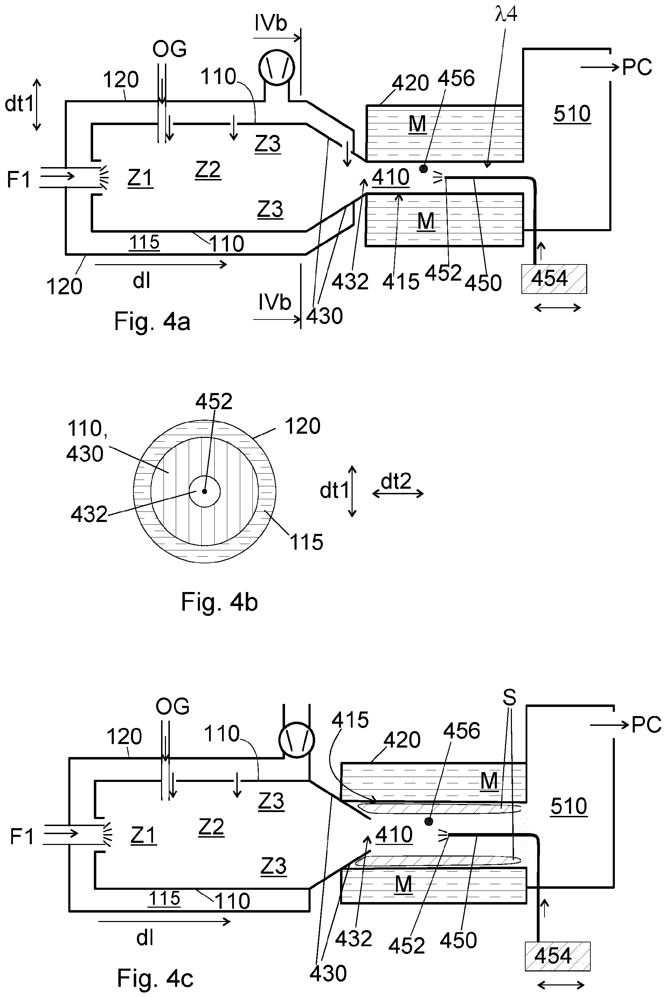

It is also noted that in addition, the oxidizer may flow in the cavity 115 in the positive longitudinal direction +dl, as shown e.g. in Figs. 4a and 1a. However, also in these embodiments, the oxidizer flows in the negative longitudinal direction from the inlet 132 to the third and second nozzle arrangements, as well as to the first nozzle arrangement. Moreover, the oxidizer does not need to flow in the positive longitudinal direction at all, as depicted in Figs. 3 and 4c.

Concerning the further combustion zones (Z4, Z5), in an embodiment heated oxidizer HO is fed to furnace 100 from a side of the furnace 100 also through a fourth nozzle arrangement 240. This defines a fourth or a fifth combustion zone, when the subsequent combustion zone ZS is the third or a fourth zone, respectively. Reference is made to Figs. 5b and 2.

In the embodiment of Fig. 2, the combustion zone extending from the fourth nozzle arrangement 240 downstream forms the fifth combustion zone Z5, because the second nozzle arrangement 220 forms the second and third combustion zones Z2, Z3. In the embodiment of Fig. 5b, the combustion zone extending from the fourth nozzle arrangement 240 downstream forms the fourth combustion zone Z4, because the second nozzle arrangement 220 forms the only the second combustion zone Z2, Z3.

The corresponding device 900 comprises the fourth nozzle arrangement 240 arranged at a side of the furnace 100 downstream from the third nozzle arrangement 230. The fourth nozzle arrangement 240 is configured to feed to the furnace 100 heated oxidizer HO from the cavity 115.

The use of more feeding points for the heated oxidizer improves the control of the combustion process within the furnace.

In a preferable embodiment, a fourth nozzle of the fourth nozzle arrangement 240 is controllable for controlling the amount of heated oxidizer HO that is fed to the furnace 100 through the fourth nozzle. The control unit 320 may be configured to control, based on a signal received from the first sensor 310, the fourth nozzle of the fourth nozzle arrangement 240.

As for the low content of SOs, it has been found that when the content of SOs of the flue gases exceeds that of a content of oxygen O₂ in the flue gases, the corrosion caused by SOs is highly promoted. Therefore, in an embodiment, the flue gases are expelled from the furnace 100 to a flue gas channel 410, a content of SOs is less than or equal to a content of O₂ of the flue gases, as measured at an outlet of the flue gas channel 410 and in the units of mol-%.

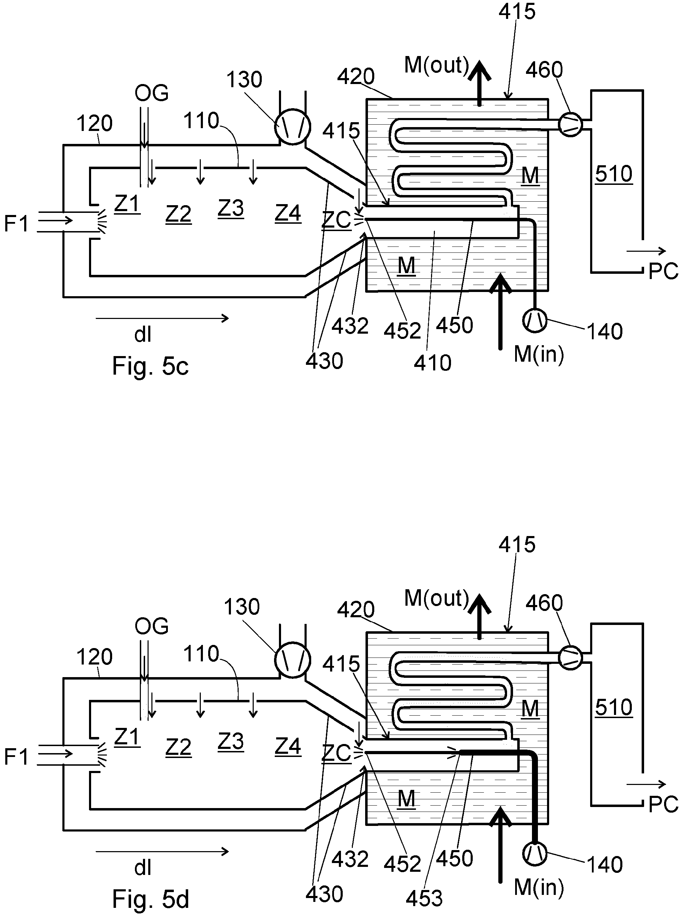

To achieve this, the production of SOs can be minimized by the means discussed this far. However, additionally, this limit can be achieved by increasing the oxygen content of the flue gas. To increase the oxygen content of the flue gas, in an embodiment oxygen-containing gas (heated or not) is fed to the flue gas channel 410 and/or to an outlet of the furnace 110 by using a staging gun 450. The oxygen-containing gas exits the staging gun 450 through a staging outlet 452 (i.e. a first staging outlet) of the staging gun 450. Reference is made to Figs. 4a-4c, 5a-5d, 6a and 6c. The oxygen-containing gas may exit the staging gun 450 also through a second staging outlet 453 as shown in Fig. 5d. What has been said about the composition of the oxidizer OX that is fed to the cavity 115 applies to the oxygen-containing gas that is fed using the staging gun 450. The same gas may be fed with the staging gun 450 that is fed to the cavity 115. In the alternative, e.g. DNCG may be used as the oxidizer that is fed to the cavity 115, and air may be fed using the staging gun 450.

The relatively high oxygen content of the flue gas may be beneficial also in terms of producing the pulping chemical PC; in other words, it may be beneficial that an oxygen content of the flue gases entering the upgrading unit 510 is within a proper range. As for the "proper range", when the flue gas is used to produce sulphuric acid H₂SO₄, the oxygen content of the flue gas may be as high as 8 to 10 mol-%. However, when the flue gas is used to produce alkali sulphite, the oxygen content of the flue gas may be e.g. 3 to 5 mol-%. Preferably, the staging gun 450 is used to feed oxygen-containing gas to the flue gas channel 410 or and outlet of the furnace 100 such that the oxygen content of the flue gas downstream from a staging outlet 452 of the staging gun 450 is 3 to 10 mol-%.

The air-fuel equivalence ratio after the staging gun 450, which in Fig. 4a is shown by the symbol λ4, is related to the oxygen content of the flue gases. Preferably, the air-fuel equivalence ratio λ4 after the staging gun 450 is at least 1.3, such as 1.3 to 1.4.

It has been found that the staging gun 450 can optionally by also used to control NOx (nitrogen oxide) emissions. Oftentimes also a low content of NOx for the flue gases is needed for environmental reasons. Production of NOx can be - at least to certain extent - be prevented by a low air-fuel equivalence ratio within the first combustion zone Z1 as discussed above.

However, the NOx content of the flue gas can be reduced by selective noncatalytic reduction (SNCR). In SNCR, a NOx reducing agent is fed to the flue gases to reduce the NOx content of the gases. The NOx reducing agent can be fed to the flue gases using the staging gun 450. The NOx reducing agent may comprise e.g. urea and/or ammonia.

One problem related to SNCR technique is that the temperature range of the flue gases to which the NOx reducing agent is fed is reasonable narrow in order for the SNCR to be effective. Typically, the NOx reducing agent should be fed to flue gases having a temperature of 850 °C to 1150 °C. As readable from the above, this temperature range may be substantially the same as in the cooling region ZC or somewhat less, depending on the temperature with the cooling region ZC. Thus, further cooling of the flue gases before feeding NOx reducing agent may be needed in some embodiments, but is not always necessary. The staging outlet 452 of the staging gun 450 may be used for feeding both oxygen-containing gas and NOx reducing agent. However, the staging gun 450 may comprise separate outlets for oxygen-containing gas and for NOx reducing agent, such as the first staging outlet 452 e.g. for oxygen-containing gas and the second staging outlet 453 e.g. for NOx reducing agent (see Fig. 5d). In the alternative, the first staging outlet 452 may be for NOx reducing agent and the second staging outlet 453 may be for oxygen-containing gas. Thus, in an embodiment, the staging gun 450 is configured to feed at least one of oxygen-containing gas and nitrogen oxide (NOx) reducing agent through the first staging outlet 452. If only NOx reducing agent is fed through the staging outlet 452, oxygen-containing gas may be fed through the second staging outlet 453.

The embodiments of Figs. 4a-4c and 5a, 5b, and 5d include further cooling of flue gases before feeding a NOx reducing agent to the flue gases, if the staging gun 450 is used to feed the NOx reducing agent at all. As detailed above, the staging gun 450 may be used to feed only oxygen-containing gas. Concerning particularly Fig. 5d, the fist staging outlet 452 may be used to feed oxidizer and the second staging outlet 453 may be used to feed oxygen-containing gas and/or the NOx reducing agent. Naturally, provided that the temperature window in the outlet of the furnace is proper, also the fist staging outlet 452 in Fig. 5d, as well as in Fig. 5c, may be used to feed NOx (in case of Fig. 5c, in addition to oxygen-containing gas).

In these embodiments, the wall of the flue gas channel 410 form a heat exchange element 415 for cooling the flue gas. The flue gas channel 410 in these embodiments extend through a vessel 420 filled with liquid heat transfer medium. Therefore, the flue gas channel 410 forms a fire tube of a fire tube boiler. The term "fire tube boiler" is considered known to a skilled person. The fire tube, as well as each part thereof, is a heat exchange element 415.

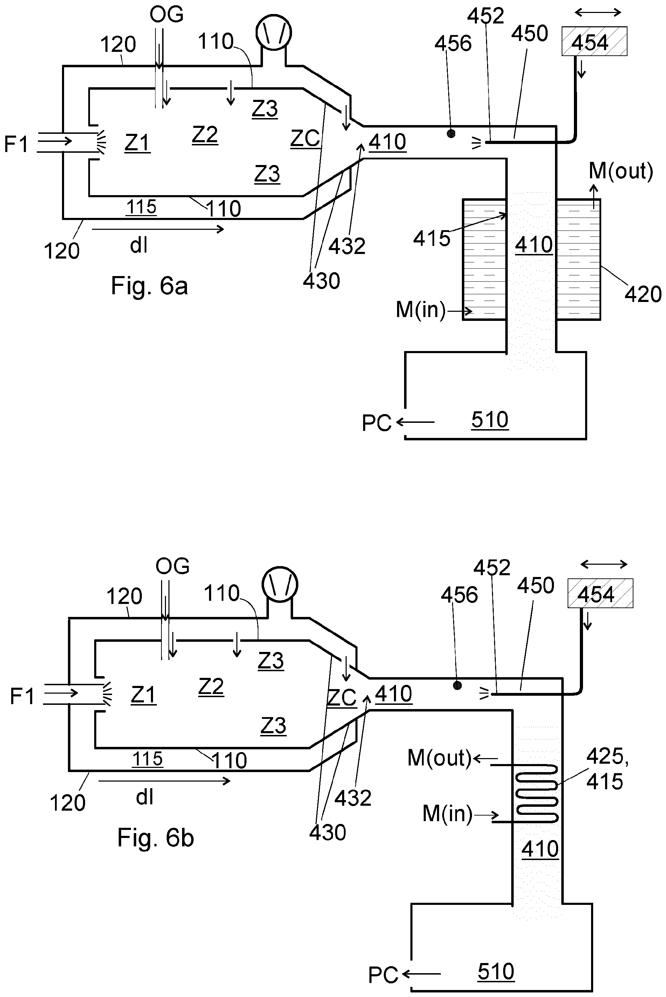

The embodiments of Figs. 6a and 6b include further cooling of flue gases after feeding a NOx reducing agent to the flue gases. Moreover, in Fig. 5c, the heat transfer element 415 is arranged downstream from the staging outlet 452. In the embodiment of Fig. 6a, the flue gas channel 410 forms a fire tube of a fire tube boiler. In the embodiment of Fig. 6b, a heat exchanger 425 is a heat exchange element 415. The type of the heat exchanger 425 of Fig. 6b is the same as in water tube boilers. The term "water tube boiler" is considered known to a skilled person.

Within this description, a "heat transfer element 415" is a piece of metal material, in particular a part of a tube, which is configured to exchange heat of the flue gas with a liquid heat transfer medium M. The flue gas may flow inside the tube (e.g. in Fig. 6a inside the flue gas channel 410) or outside the tube (e.g. in Fig. 6b outside the heat exchanger 425). The liquid heat transfer medium M is in contact with the heat transfer element 415 on the opposite side.

The embodiments of Figs. 5a-5d comprise a secondary means 460 for driving flue gas FG to the upgrading unit 510 from the furnace 100 or from the flue gas channel 410. The secondary means 460 has the technical effect of improving flow of the flue gas, in particular when a long flue gas channel is applied. A long flue gas channel has the benefit of improving heat recovery from the flue gas. The secondary means 460 for driving flue gas FG to the upgrading unit 510 comprises a compressor, a pump, or a fan. The secondary means 460 is arranged downstream from the furnace 100, such as downstream from an outlet 452 of a/the staging gun 450. The secondary means 460 may be arranged e.g. downstream from all such heat exchange elements 415 that are configured to recover heat from flue gas to a liquid heat transfer medium. Moreover, the secondary means 460 is arranged downstream from the heat exchange element 415, which is configured to cool the flue gases. This has the benefit of increasing service life of the secondary means 460. Obviously, an embodiment of the method comprises using the secondary means 460 for driving flue gas FG to the upgrading unit 510 from the furnace 100 or a/the flue gas channel 410 to drive the flue gas to the upgrading unit 510. The secondary means 460 also helps to drive the gaseous oxidizer OX through the oxidizer inlet 132 to the cavity 115 by improving gas flow.

As shown in Figs. 4a-4c, 5a-5d, 6a and 6c figures, an embodiment of the device 900 comprises a flue gas channel 410 that is arranged downstream from the furnace 100. Herein the term downstream refers to the direction of flow of flue gases. The device comprises the staging gun 450, which comprises the first staging outlet 452. In an embodiment, the first staging outlet 452 is arranged in the flue gas channel 410. However, referring to Figs. 5c and 5d, in an embodiment, the first staging outlet 452 is arranged at an outlet 432 of the furnace 110. The staging gun 450 is configured to feed oxygen-containing gas, and optionally, a NOx reducing agent to the flue gases through the staging outlet or outlets (452, 453). By feeding oxygen-containing gas, the oxygen content of the flue gases can be increased. By feeding the NOx reducing agent to the flue gases, at least provided that the temperature of the flue gases at that point is suitable for the purpose, the NOx content of the flue gases can be reduced.

However, it has been found that a proper mixing of the oxygen-containing gas or NOx reducing agent with the flue gases is important. Moreover, it has been found that by increasing the flow velocity of the flue gases, and by feeding the oxygen-containing gas or NOx reducing agent to such a location where the flow velocity is high, the degree of mixing improves. The flow velocity can be increased by providing a taper 430 to a second end of the furnace.

Referring in particular to Figs. 4a and 4b, preferably, in the device 900 the furnace 100 has a length that is greater than a diameter of the furnace 100, and the length defines the longitudinal direction dl of the furnace 100. Preferably the furnace 100 comprises a taper 430 such that the furnace 100 tapers towards the flue gas channel 410 in the longitudinal direction dl to increase flow velocity of flue gases within the flue gas channel 410. Moreover, the furnace 100 comprises a flue gas outlet 432 through which flue gases exit the furnace 100 and enter the flue gas channel 410.

Referring to Fig. 4a, a diameter of the flue gas channel 410 may be equal or substantially equal to a diameter of the flue gas outlet 432. In such a case, the flow velocity is increased within the whole flue gas channel.

However, referring to Fig. 4c, a diameter of the flue gas channel 410 may be greater than a diameter of the flue gas outlet 432. In such a case, the flow velocity is increased within the flue gas channel mostly at such locations that are arranged to the longitudinal direction dl from the flue gas outlet 432. In particular, at locations that are radially further away from a centre of the flue gas outlet 432 than an exterior of the flue gas outlet, the flow velocity of flue gas is not increased as much. Regions, where flow velocity is not necessarily much increased are shown in by the reference "S" in Fig. 4c.

For these reasons, in a preferable embodiment, at least a part of the first staging outlet 452 of the staging gun 450 is arranged at the flue gas outlet 432 (as in Figs. 5c and 5d) or in the longitudinal direction dl from the flue gas outlet 432 (as in Figs. 4a, 4c, 5a, 5b, 6a, and 6b). More specifically, at least a part of the staging outlet 452 of the staging gun 450 is arranged (i) at the flue gas outlet 432 or (ii) only in the longitudinal direction dl from a location occupied by the flue gas outlet 432.

To illustrate this further, Fig. 4b shows the view IVb-IVb of Fig. 4a. In Fig. 4b, the outer wall 120 is shown as a radially outermost wall. The inner wall 110 resides radially inwards therefrom and the cavity 115 is arranged in between. Moreover, the taper 430 reduces an inner diameter of the furnace to the diameter of the flue gas outlet 432. The flue as outlet 432, which in this exemplary figure is circular, defines a cylindrical space, in which the flow velocity is increased. The cylindrical space has the same diameter and central axis as the flue gas outlet 432; however, the cylindrical space extends in the longitudinal direction dl. As depicted in Fig. 4b, the staging outlet 452 of the staging gun 450 is arranged in this cylindrical space (or at the flue gas outlet 432). In other words, in Fig. 4b, the staging outlet 452 of the staging gun 450 is arranged in the longitudinal direction dl from the flue gas outlet 432 (or at the flue gas outlet 432). The directions dt1 and dt2 shown in Fig. 4b are perpendicular to the longitudinal direction dl.

It is noted that a cross section of the furnace does not need to be circular. Moreover, a cross section of the flue gas outlet does not need to be circular. However, for manufacturing purposes it may be beneficial that that a cross section of the furnace 100 is circular. It may also be beneficial that the a cross section of the flue gas outlet 432 circular.

Another way of increasing the mixing of the oxygen-containing gas or NOx reducing agent with the flue gases is to provide the staging outlet(s) 452, 453 with such nozzles that as configured to increase the degree of mixing. The nozzle(s) of the staging outlet(s) 452, 453 may e.g. feed the oxygen-containing gas or the NOx reducing agent to a direction that is mainly upstream and somewhat lateral. Moreover, the nozzle(s) of the staging outlet(s) 452, 453 may e.g. shatter the flow of the oxygen-containing gas and/or the NOx reducing agent to improve mixing with flue gases.

As indicated above, the temperature range of the flue gas to which the NOx reducing agent is fed is somewhat critical. A proper temperature range is 850 °C to 1150 °C. This applies also when both NOx reducing agent and oxygen-containing gas are fed through the staging gun 450. If only oxygen-containing gas is fed through the staging gun 450, the temperature is not that critical.

Therefore, an embodiment of the method utilizing the NOx reducing agent comprises guiding combustion products from the furnace 100 to the flue gas channel 410, which is arranged downstream from the subsequent combustion zone ZS. The embodiment comprises feeding the NOx reducing agent (i.e. nitrogen oxide reducing agent) to the flue gas channel 410 through a staging outlet 452 of a staging gun 450. In the embodiment, a temperature 0 to 1.5 metres upstream from the staging outlet 452 of the staging gun 450 is 850 °C to 1150 °C. The NOx reducing agent may be fed through a second staging outlet 453 too (or in the alternative). Thus, a temperature 0 to 1.5 metres upstream from the staging outlet (452, 453) through which the nitrogen oxide (NOx) reducing agent is fed is 850 to 1150 °C. The staging outlet (452, 453) through which the nitrogen oxide (NOx) reducing agent is fed may be the first staging outlet 452 or the second staging outlet 453, or NOx reducing agent may be fed through both.

The temperature at exactly the outlet 452, 453 of the staging gun 450 may be less, because the NOx reducing agent itself and/or the oxygen-containing gas may reduce the temperature. However, as the NOx reducing agent mixes with the flue gas, a proper temperature range is thus achieved. The term upstream is here used in relation to the flow of the flue gases near the staging outlet 452, 453, which is used to feed the NOX reducing agent.

Moreover, when the staging gun 450 is used for feeding oxygen-containing gas, the device 900 comprises a third means 140 for driving oxygen-containing gas, such as compressor, pump or fan. The third means 140 is shown in Figs. 5a and 5b and can be used in other embodiments where oxygen-containing gas is fed with the staging gun, too 450. Using the third means 140, which is separate from the means 130 (see Fig. 1b), has the benefit that the amount of oxygen-containing gas fed in this stage is controlled better. In addition, it would not be energetically beneficial for feeding heated oxygen-containing gas to this stage.

The temperature of the flue gases within the flue gas channel 410 can be controlled at least to some extent by controlling the oxidizer/primary fuel/malodorous substance feed to the furnace. However, the temperature profile within the flue gas channel varies spatially in particular when a heat exchange element 415 is applied. Obviously, at this point of the combustion process, the temperature decreases in the downstream direction.

Thus, it has been found that by moving at least the staging outlet 452 of the staging gun 450, the temperature of the flue gases in the vicinity of the staging outlet 452 changes even if the combustion process conditions otherwise remain constant. The staging outlet 452 can be moved e.g. by moving the whole staging gun 450. In the alternative, the staging gun 450 may be provided by extendable means, e.g. telescopic mechanism, so that the staging outlet 452 can be moved even if a part of the staging gun 450 remains stationary with respect to the flue gas channel 410.

Therefore, an embodiment of the method comprises measuring a temperature in the flue gas channel 410 and moving at least the staging outlet 452 of the staging gun 450 such that a temperature 0 to 1.5 metres upstream from the outlet 452 of the staging gun 450 is 850 °C to 1150 °C.

Finding a proper position in view of the temperature may be easier, if a spatial temperature profile within the flue gas channel is determined. Thus, one may determine from the spatial temperature profile where the temperature would be most suitable for feeding the NOx reducing agent. Thus, a preferable embodiment comprise determining a spatial temperature profile in the flue gas channel 410, and moving at least the staging outlet 452 of the staging gun 450 such that a temperature 0 to 1.5 metres upstream from the staging outlet 452 of the staging gun 450 is 850 to 1150 °C as determined from the spatial temperature profile.

In a corresponding device 900, the position of the staging outlet 452 of the staging gun 450 is movable both downstream and upstream in the flue gas channel 410. Moreover the embodiment of the device 900 comprises means 454 for moving the staging outlet 452 of the staging gun 450. Reference is made to Figs. 4a, 4c, 6a, and 6b.

Movement of the staging outlet 452 is preferably automated. Thus, an embodiment of the device 900 comprises a second sensor 456 for measuring a temperature from the flue gas channel 410. Moreover the control unit 320 of the device 900 or another control unit of the device is configured to control the means 454 for moving the staging outlet 452 of the staging gun 450 by using information receivable from the second sensor 456.

For determining a spatial temperature profile, the device 900 may comprise further temperature sensors for measuring temperatures from various locations of the flue gas channel 410. Interpolation my be applied to complete the temperature profile. In the alternative, the second sensor 456 may be movable so that by moving the second sensor and making measurements at various locations, a spatial tempera profile is obtained. The second sensor 456 may be e.g. fixed to the movable staging outlet 452.

It is also possible e.g. to provide the staging gun 450 with a single temperature sensor configured to give information on the temperature from a suitable position with respect to the staging outlet 452. If the temperature tends to be too high, the staging outlet 452 may be moved downstream, and if the temperature tends to be too low, the staging outlet 452 may be moved upstream.

If the NOx reducing agent is fed through the second staging outlet 453, what has been said above about the proper temperature and moving the outlet applies *mutatis mutandis.*

Concerning recovering heat from flue gases, in the embodiments of Figs. 4a-4c, 5a-5d, and 6a-6b, a heat transfer element 415 configured to recover heat from flue gas to a liquid heat transfer medium M. In Figs. 5a-5d, 6a, and 6b the reference "M(in)" indicates feed of the liquid heat transfer medium M to be heated. The reference "M(out)" indicates expel of the heated heat transfer medium M. Upon heating, the heat transfer medium M may change phase, e.g. if water is used as the liquid heat transfer medium M, the water may boil to form steam, which is no longer liquid.

Recovering heat from flue gases has several effects. If recovered upstream from the staging outlet 452, heat recovery can be utilized to adjust the temperature of the flue gases near the staging outlet 452. Moreover irrespective of the location of heat recovery, heat recovery has at least the following effects:
- improved efficiency of the plant,
- improved yield of the pulping chemical PC, because the production of the pulping chemical oftentimes requires a suitably Io temperature, and
- improved service life of some components, in particular the secondary means 460 for driving flue gas FG to the upgrading unit 510, if used.

As shown in Figs. 5a and 5b, the device may comprise heat transfer elements 415 both upstream and downstream from the staging outlet 452.

Thus, an embodiment of the method comprises recovering heat from the flue gas to a liquid heat transfer medium M by using a heat exchange element 415. The heat exchange element 415 is arranged downstream from the second combustion zone Z2 and upstream from the upgrading unit 510 wherein the pulping chemical PC is produced. The heat exchange element 415 is preferably arranged downstream from the furnace 100. In particular, when the device 900 comprises the taper 430, the heat exchange element 415 is preferably arranged downstream from the taper 430. This helps manufacturing, because the inner wall 110 of the furnace may comprise brick and/or mortar, and arranging the heat transfer element 415 downstream therefrom is easy.

Preferably, the heat recovery is performed using the principles of a fire tube boiler. Therefore, in a preferable embodiment, a part of a wall of the flue gas channel 410 forms the heat exchange element 415. Then, liquid heat transfer medium M is arranged in a vessel 420 outside the flue gas channel 410. The liquid heat transfer medium M of the vessel is arranged in contact with the heat exchange element 415, i.e. the part of the wall of the flue gas channel 410. A firetube type heat exchange element 415 is oftentimes easier to maintain than a watertube type heat exchange element 415.

In an embodiment, the heat exchange element 415 is arranged upstream from the staging outlet (452, 453) that is used to feed NOx reducing agent. As indicated above, this helps cooling the flue gases to a suitable temperature range in view of the SNCR NOx reduction.

A corresponding device 900 comprises the flue gas channel 410 arranged downstream from the furnace 100, such as downstream from the taper 430 of the furnace 430. The embodiment of the device comprises a heat exchange element 415 configured to recover heat from the flue gas channel 410 to a liquid heat transfer medium M.

When the heat recovery is of the fire tube boiler type, the device 900 comprises a vessel 420 suitable for holding liquid heat transfer medium M. Moreover, a part of the flue gas channel 410 extends through the vessel 420, whereby the part extending through the vessel 420 comprises the heat exchange element 415.

When the heat exchange element 415 is used to cool the flue gases for the purposes of SNCR, the staging outlet 452 of the staging gun 450 is arranged downstream from the heat exchange element 415.

The upgrading unit 510 and/or the process for producing the pulping chemical PC may be somewhat critical to the temperature of the flue gases, depending on the process and the pulping chemical PC. As detailed above, a heat exchange element 415 can be used to cool the flue gases. However, alternative or in addition, the flue gases can be cooled by quenching, as illustrated in Fig. 7. In Fig. 7, a quencher 610 is configured to feed liquid quenching medium, for example water, to the flue gases. The quenching medium is preferably sprayed to the flue gas in the form of droplets. When contacting with the flue gas, the at least a part of the droplets of the quenching medium evaporate thereby efficiently cooling the flue gas. If not all the quenching medium evaporates, liquid quenching medium may be collected from the flue gas channel.

Therefore, an embodiment of the method comprises cooling the flue gases downstream from the second combustion zone Z2 and upstream from an upgrading unit 510 by quenching and/or using a heat exchange element 415. The pulping chemical PC is produced in the upgrading unit 510.

## Claims

1. A method for producing a pulping chemical (PC) by burning sulphur and malodorous substance (OG), the method comprising
- feeding primary fuel (F1) and heated oxidizer (HO) to a first combustion zone (Z1) of a furnace (100) limited by an inner wall (110) to oxidize at least some of the sulphur of the primary fuel (F1) within the first combustion zone (Z1),
- feeding malodorous substance (OG) and heated oxidizer (HO) to the furnace to form at least a second combustion zone (Z2) to the furnace (100),
- feeding heated oxidizer (HO) to a subsequent combustion zone (ZS) of the furnace (100), and
- using sulphur dioxide (SO₂) of flue gases receivable from the furnace (100) to produce the pulping chemical (PC), wherein
- the second combustion zone (Z2) is arranged downstream from the first combustion zone (Z1) and the subsequent combustion zone (ZS) is arranged downstream from the second combustion zone (Z2),
- the malodorous substance (OG) is collected from a pulp mill, and
- the pulping chemical (PC) is sulphuric acid (H₂SO₄) or an alkali sulphite (e.g. one of Na₂SO₃, K₂SO₃, CaSO₃, MgSO₃),
**characterized in that**
- the primary fuel (F1) comprises elementary sulphur,
- in the subsequent combustion zone (ZS) or downstream from the subsequent combustion zone (ZS) a temperature is 1000 °C to 1375 °C and an air-fuel equivalence ratio is at least 1.0 to reduce formation of sulphur trioxide (SOs), and the method comprises
- feeding gaseous oxidizer (OX) to a cavity (115) arranged between the inner wall (110) of the furnace (100) and an outer wall (120) to heat the gaseous oxidizer (OX) in the cavity (115) to produce the heated oxidizer (HO).

2. The method of claim 1, comprising feeding the primary fuel (F1) and the heated oxidizer (HO) to the furnace (100) in such a way that [A]
- combustion products of the primary fuel remain in the region wherein the temperature is 1000 °C to 1375 °C and the air-fuel equivalence ratio is at least 1.0 for a residence time, wherein the residence time is at least 0.5 seconds, such as 0.5 to 2 s and/or [B]
- a gauge pressure in the region wherein the temperature is 1000 °C to 1375 °C and the air-fuel equivalence ratio is at least 1.0 is at most 500 Pa(g) and at least minus 50 Pa(g) and/or [C]
- in the region wherein the temperature is 1000 °C to 1375 °C and the air-fuel equivalence ratio is at least 1.0, the air-fuel equivalence ratio is 1.0 to 1.4, preferably 1.1 to 1.3, and more preferably 1.15 to 1.25.

3. The method of the claim 1 or 2, comprising
- feeding heated oxidizer (HO), the primary fuel (F1) and the malodorous substance (OG) to the furnace (100) such that an air-fuel equivalence ratio in the first combustion zone (Z1) is less than 0.95, such as 0.6 to 0.95; preferably,
- the heated oxidizer (HO) is fed to the furnace (100) in such a way that 40 % to 60 % by volume of the total amount of oxidizer is fed to the first combustion zone (Z1).

4. The method of any of the claims 1 to 3, comprising
- feeding the primary fuel (F1) and the heated oxidizer (HO) to the first combustion zone (Z1) of the furnace (100) in such a way that [A]
- a temperature (T₁) in the first combustion zone (Z1) is 1400 to 1800 °C and/or [B]
- a residence time (τ₁) in the first combustion zone (Z1) is at most is 0.3 seconds, such as 0.1 to 0.3 seconds.

5. The method of any of the claims 1 to 4, wherein
- the furnace (100) has a length that is greater than a diameter of the furnace (100), the length defining a longitudinal direction (dl), the method comprising
- feeding the primary fuel (F1) and the heated oxidizer (HO) to the first combustion zone (Z1) of the furnace (100) from a first end (E1) of the furnace (100) through a first nozzle arrangement (210),
- feeding the malodorous substance (OG) and the heated oxidizer (HO) to the furnace (100) from a side or sides of the furnace (100) through a second nozzle arrangement (220),
- feeding the heated oxidizer (HO) to the furnace (100) from a side or sides of the furnace (100) through a third nozzle arrangement (230), and
- feeding gaseous oxidizer (OX) to the cavity (115) through an oxidizer inlet (132), wherein
- the second nozzle arrangement (220) is arranged in the longitudinal direction (dl) from the first end (E1) of the furnace (100),
- the third nozzle arrangement (230) is arranged further away from the first end (E1) than the second nozzle arrangement (220) from the first end (E1), and
- the oxidizer inlet (132) and the third nozzle arrangement (230) are arranged relative to each other such that the oxidizer flowing in the cavity (115) from the oxidizer inlet (132) to the third nozzle arrangement (230) flows at least in a negative longitudinal direction (-dl).

6. The method of any of the claims 1 to 5, comprising
- feeding at least oxygen-containing gas to flue gases through a first staging outlet (452) of a staging gun (450), wherein
- the first staging outlet (452) is arranged at an outlet (432) of the furnace (100) or in a flue gas channel (410) downstream from the furnace (100).

7. The method of claim 6, comprising
- feeding also a nitrogen oxide (NOx) reducing agent to the flue gases through the first staging outlet (452) or a second staging outlet (453) such that
- a temperature 0 to 1.5 metres upstream from the staging outlet (452, 453) through which the nitrogen oxide (NOx) reducing agent is fed is 850 to 1150 °C, wherein
- the staging outlet (452, 453) through which the nitrogen oxide (NOx) reducing agent is fed is arranged at an outlet (432) of the furnace (100) or in a flue gas channel (410) downstream from the furnace (100).

8. The method of the claim 7, comprising
- measuring a temperature in the flue gas channel (410), and
- moving at least the outlet (452, 453) through which the nitrogen oxide (NOx) reducing agent is fed such that
- a temperature 0 to 1.5 metres upstream from the staging outlet (452, 453) through which the nitrogen oxide (NOx) reducing agent is fed is 850 to 1150 °C.

9. The method of any of the claims 1 to 8, comprising
- cooling the flue gases downstream from the second combustion zone (Z2) and upstream from an upgrading unit (510) by quenching and/or using a heat exchange element (415), wherein the pulping chemical (PC) is produced in the upgrading unit (510);
preferably the method comprises
- recovering heat to a liquid heat transfer medium (M) by using a heat exchange element (415) arranged downstream from the second combustion zone (Z2) and upstream from an upgrading unit (510) wherein the pulping chemical (PC) is produced;
more preferably,
- the heat exchange element (415) is arranged upstream from the staging outlet (452) of the staging gun (450).

10. A device (900) for producing a pulping chemical (PC) by burning elementary sulphur and malodorous substance (OG), the device (900) comprising
- an inner wall (110) limiting a furnace (100) having an elongated shape,
- an oxidizer inlet (132),
- means (130), such as a compressor, a pump, or a fan, for driving gaseous oxidizer (OX) through the oxidizer inlet (132),
- a first nozzle arrangement (210) arranged at a first end (E1) of the furnace (100),
- a second nozzle arrangement (220) arranged at a side or sides of the furnace (100),
- a third nozzle arrangement (230) arranged further away from the first end (E1) than the second nozzle arrangement (220), wherein,
- at least one of
• a first nozzle (211) of the first nozzle arrangement (210),
• a second nozzle (221) of the second nozzle arrangement (220), and
• a third nozzle (231) of the third nozzle arrangement (230) is controllable for controlling the amount of heated oxidizer (HO), primary fuel (F1), or malodorous substance (OG) that is fed to the furnace through the first (211), second (221), or third (231) nozzle, respectively, the device (900) further comprising
- an upgrading unit (510) configured to produce the pulping chemical (PC) using sulphur dioxide (SO₂) of flue gases receivable from the furnace (100), the pulping chemical (PC) being sulphuric acid (H₂SO₄) or an alkali sulphite (e.g. one of Na₂SO₃, K₂SO₃, CaSO₃, MgSO₃),
**characterized in that** the device (900) comprises
- a first sensor (310),
- a control unit (320), and
- an outer wall (120) limiting a cavity (115) for heating gaseous oxidizer (OX) and for conveying heated oxidizer (HO) to the furnace (100), the cavity (115) being arranged between the inner wall (110) and the outer wall (120), wherein
- the oxidizer inlet (132) is for letting in gaseous oxidizer (OX) to the cavity (115),
- the means (130) is for driving gaseous oxidizer (OX) through the oxidizer inlet (132) to the cavity (115),
- the first nozzle arrangement (210) is configured to feed to the furnace (100)
• heated oxidizer (HO) from the cavity (115) and
• primary fuel (F1) comprising elementary sulphur,
- the second nozzle arrangement (220) is configured to feed to the furnace (100)
• heated oxidizer (HO) from the cavity and
• malodorous substance (OG),
- the third nozzle arrangement (230) is configured to feed to the furnace (100) heated oxidizer (HO) from the cavity (115),
- the first sensor (310) is arranged to give information indicative of a temperature from a location of the third nozzle arrangement (230) or downstream from the third nozzle arrangement (230), and
- the control unit (320) is configured to control, based on a signal received from the first sensor (310), at least one of the first nozzle (211), the second nozzle (221), and the third nozzle (231) such that in the third combustion zone Z3 or downstream from the third combustion zone a temperature is 1000 °C to 1375 °C and an air-fuel equivalence ratio is at least 1.0.

11. The device (900) of claim 10, wherein
- the furnace (100) has a length that is greater than a diameter of the furnace (100), the length defining a longitudinal direction (dl),
- the second nozzle arrangement (220) is arranged in the longitudinal direction (dl) from the first end (E1) of the furnace (100), and
- the oxidizer inlet (132) and the third nozzle arrangement (230) are arranged relative to each other such that the oxidizer flowing in the cavity (115) from the oxidizer inlet (132) to the third nozzle arrangement (230) flows at least in the negative longitudinal direction (-dl).

12. The device of the claim 10 or 11, comprising
- a flue gas channel (410) and
- a staging gun (450) comprising a first staging outlet (452), wherein
- the first staging outlet (452) is arranged at an outlet (432) of the furnace (100) or in the flue gas channel (410) and
- the staging gun (450) is configured to feed at least one of oxygen-containing gas and a nitrogen oxide (NOx) reducing agent through the staging outlet (452).

13. The device of claim 12, wherein
- the furnace (100) has a length that is grater than a diameter of the furnace (100), the length defining a longitudinal direction (dl) of the furnace,
- the furnace (100) comprises a taper (430) such that the furnace (100) tapers towards the flue gas channel (410) in the longitudinal direction (dl) to increase flow velocity of flue gases within the flue gas channel (410),
- the furnace (100) comprises a flue gas outlet (432) through which flue gases exit the furnace (100) and enter the flue gas channel (410), and
- at least a part of the first staging outlet (452) of the staging gun (450) is arranged at the flue gas outlet (432) or in the longitudinal direction (dl) from the flue gas outlet (432).

14. The device (900) of claim 12 or 13, wherein
- the position of the first staging outlet (452) of the staging gun (450) is movable both downstream and upstream in the flue gas channel (410), the device (900) comprising
- means (454) for moving the staging outlet (452) of the staging gun (450); preferably,
- the device (900) comprises a second sensor (456) for measuring a temperature from the flue gas channel (410) and
- the control unit (320) of the device (900) or another control unit of the device is configured to control the means (454) for moving the staging outlet (452) of the staging gun (450) by using information receivable from the second sensor (456).

15. The device (900) of any of the claims 10 to 14, wherein
- the inner wall (110) comprises an inner layer (110a) and an outer layer (110b), the inner layer facing the furnace (110) and the outer layer facing the cavity (115),
- the inner layer (110a) comprises fire-proof bricks,
- the outer layer (110b) comprises thermally insulating bricks, and
- a total thickness of the inner layer (110a) and the outer layer (110b) is 150 mm to 250 mm.

16. A use of the device (900) of any of the claims 10 to 15, the use comprising
- operating the means (130), such as a compressor, a pump, or a fan, for driving gaseous oxidizer (OX) through the oxidizer inlet (132) to the cavity (115) to drive gaseous oxidizer (OX) through the oxidizer inlet (132) to the cavity (115),
- feeding heated oxidizer (HO) from the cavity (115) and the primary fuel (F1) comprising elementary sulphur through the first nozzle arrangement (210) to the furnace (100),
- feeding heated oxidizer (HO) from the cavity (115) and the malodorous substance (OG) through the second nozzle arrangement (220) to the furnace (100),
- feeding heated oxidizer (HO) from the cavity through (115) the third nozzle arrangement (230) to the furnace (100),
- measuring a signal (SIG) indicative of a temperature using the first sensor (310) and transmitting the signal (SIG) to the control unit (320),
- controlling, by using the control unit (320) and based on the signal (SIG) received from the first sensor (310), at least one of the first nozzle (211) of the first nozzle arrangement (210), the second nozzle (221) of the second nozzle arrangement (220), and the third nozzle (231) of the third nozzle arrangement (230), such that in a subsequent combustion zone (ZS) or downstream from the subsequent combustion zone (ZS) a temperature is 1000 °C to 1375 °C and an air-fuel equivalence ratio is at least 1.0 to reduce formation of sulphur trioxide (SOs), the use comprising
- producing sulphuric acid (H₂SO₄) or an alkali sulphite (e.g. one of Na₂SO₃, K₂SO₃, CaSOs, MgSOs) with the upgrading unit (510).
